# EUROPÄISCHE PATENTSCHRIFT

(11) **EP 2 407 271 B1**
(45) Veröffentlichungstag und Bekanntmachung des Hinweises auf die Patenterteilung: **05.06.2013**
(21) Anmeldenummer: 11172770.7
(22) Anmeldetag: 05.07.2011
(51) Int. Cl.: B23Q 1/70, B23Q 5/10

(54) **Spindeleinheit**
Spindle unit
Unité de broche

(30) Priorität: 12.07.2010 DE 102010031231; 11.10.2010 DE 102010042281
(43) Veröffentlichungstag der Anmeldung: 18.01.2012
(73) Patentinhaber: Index-Werke GmbH & Co. KG Hahn & Tessky, 73730 Esslingen (DE)
(72) Erfinder: Schleich, Günter, 73269 Hochdorf (DE)
(74) Vertreter: Hoeger, Stellrecht & Partner Patentanwälte

(56) Entgegenhaltungen:
- EP-A1- 0 563 862
- EP-A2- 0 852 170
- WO-A2-02/092277
- DE-A1- 10 027 750

## Beschreibung

Die Erfindung betrifft eine Spindeleinheit für eine Werkzeugmaschine, umfassend ein Spindelgehäuse und einen in dem Spindelgehäuse angeordneten Spindelmotor mit einem auf einer Spindel angeordneten Rotor und einem relativ zum Spindelgehäuse mittels eines Statorträgers fixierten Stator sowie mit zunächst einer vorderen, insbesondere einem Arbeitsraum zugewandten Spindellagereinheit und einer hinteren, dem Arbeitsraum abgewandten Spindellagereinheit, welche die Spindel um eine Spindelachse drehbar lagern.

Derartige Spindeleinheiten sind aus dem Stand der Technik bekannt.

Die Spindeleinheit einer Werkzeugmaschine definiert die genaue geometrische Lage der Spindel in allen Achsrichtungen der Werkzeugmaschine relativ zu den übrigen Bearbeitungseinheiten und ist daher entscheidend für die Genauigkeit, mit der die Werkstücke herstellbar sind.

Bei den bekannten Werkzeugmaschinen wird daher die Spindeleinheit mit dem Spindelmotor, der vorderen Spindellagereinheit und der hinteren Spindellagereinheit als Gesamtsystem montiert und geprüft, so dass die Spindeleinheit nur als Ganzes an der Werkzeugmaschine montiert oder demontiert werden kann.

Dies erfordert ein sehr exaktes Ausrichten der Spindeleinheit relativ zu der Werkzeugmaschine, insbesondere zu einem Maschinengestell derselben, da durch die Ausrichtung der Spindeleinheit relativ zur Werkzeugmaschine, insbesondere zum Maschinengestell derselben, die gesamte Genauigkeit der Werkzeugmaschine bei der Herstellung der Werkstücke definiert wird.

Erfolgt jedoch eine Beschädigung einer Spindeleinheit, insbesondere im Bereich des Spindelmotors oder einer der Spindellagereinheiten, so muss die gesamte Spindeleinheit aus der Werkzeugmaschine ausgebaut und zur Montage in das Herstellerwerk gebracht werden, da nur im Herstellerwerk eine Demontage und erneute Montage einer Spindeleinheit aufgrund höchster Anforderungen an die Präzision möglich ist.

Dies hat jedoch den Nachteil, dass der Ausbau einer Spindeleinheit aus seiner in einer im Produktionsprozess stehenden Werkzeugmaschine und die Reparatur derselben in der Regel Zeiträume von ungefähr einer Woche in Anspruch nimmt.

Aus dem Patent dokument DE-A-10027750 ist eine Spindeleinheit bekannt, wobei in einem Montagezustand die vordere Spindellagereinheit und die hintere Spindellagereinheit zur einer Einheit verbindbar sind, die der Rotor und die Spindle umfasst.

Der Erfindung liegt daher die Aufgabe zugrunde, eine Spindeleinheit für Werkzeugmaschinen der eingangs beschriebenen Art derart zu verbessern, dass diese bei Wahrung der Präzisionsanforderungen montage- und reparaturfreundlicher ist.

Diese Aufgabe wird bei einer Spindeleinheit der eingangs beschriebenen Art erfindungsgemäß dadurch gelöst, dass in einem Montagezustand die vordere Spindellagereinheit und die hintere Spindellagereinheit mit dem Statorträger zu einer Einheit verbindbar sind, die den Spindelmotor und die Spindel umfasst und als Ganzes in das Spindelgehäuse einsetzbar oder aus diesem entnehmbar ist, und dass in einem Betriebszustand zumindest die vordere Spindellagereinheit über Passflächen exakt relativ zum Spindelgehäuse positionierbar und fixierbar sind.

Der Vorteil der erfindungsgemäßen Lösung ist darin zu sehen, dass bei dieser die Möglichkeit besteht, die Spindellagereinheiten mitsamt dem Statorträger, dem Spindelmotor und der Spindel aus dem Spindelgehäuse zu entnehmen oder in dieses einzusetzen, so dass das Spindelgehäuse als solches nicht von der Werkzeugmaschine demontiert oder ausgetauscht werden muss, und somit das Spindelgehäuse in seiner einmal vorgegebenen Ausrichtung relativ zur Werkzeugmaschine verbleiben kann, während lediglich ein Auswechseln der Spindellagereinheiten mit dem Spindelmotor und der Spindel erfolgt, was nur dadurch möglich ist, dass die Spindellagereinheit mit dem Statorträger zu einer den Spindelmotor und die Spindel umfassenden Einheit verbindbar sind, die als Ganzes aus dem Spindelgehäuse entnehmbar ist.

Außerdem ist durch Passflächen im Betriebszustand die Position der vorderen und hinteren Spindellagereinheit relativ zum Spindelgehäuse exakt definiert, so dass bei einer in einer Produktion aufgestellten Werkzeugmaschine die Möglichkeit besteht, eine derartige, die Spindellagereinheiten, den Statorträger, den Spindelmotor und die Spindel umfassende Einheit gegen eine andere entsprechende Einheit auszutauschen, bei welcher wiederum die Spindellagereinheiten relativ zum Spindelgehäuse mittels der Passflächen in derselben exakten Ausrichtung relativ zur Werkzeugmaschine positioniert werden, da das Spindelgehäuse als solches relativ zum Maschinengestell unverändert verbleibt.

Darüber hinaus eröffnet eine derartige Spindeleinheit aber auch die Möglichkeit, beispielsweise das Spindelgehäuse zusammen mit der Werkzeugmaschine, insbesondere einem Maschinengestell derselben, durch hochpräzise Bearbeitung herzustellen, so dass hierbei der aufwändige Prozess der Ausrichtung des Spindelgehäuses relativ zum Maschinengestell durch die gemeinsame hochpräzise Bearbeitung von Spindelgehäuse und Maschinengestell vermieden werden kann.

Hinsichtlich der Ausrichtung der Spindellagereinheiten relativ zum Spindelgehäuse im Betriebszustand wurden bislang keine näheren Angaben gemacht.

So sieht eine vorteilhafte Lösung vor, dass die vordere Spindellagereinheit in dem Betriebszustand über radial positionierend wirkende Passflächen relativ zum Spindelgehäuse positionierbar ist.

Da allerdings rein radial positionierend wirkende Passflächen nicht ausreichend sind, um eine exakte Lage der vorderen Spindellagereinheit vorzugeben, ist vorzugsweise vorgesehen, dass in dem Betriebszustand die vordere Spindellagereinheit über axial positionierend wirkende Flächen relativ zum Spindelgehäuse positionierbar ist.

Um auch die hintere Spindellagereinheit exakt relativ zum Spindelgehäuse positionieren zu können, ist auch diese in dem Betriebszustand über radial positionierend wirkende Passflächen relativ zum Spindelgehäuse positionierbar und fixierbar.

Ferner ist auch im Zusammenhang mit der hinteren Spindellagereinheit vorgesehen, dass diese in dem Betriebszustand über axial positionierend wirkende Flächen relativ zum Spindelgehäuse positionierbar und fixierbar ist.

Um im Montagezustand die Einheit aus den Spindellagereinheiten, dem Statorträger, dem Spindelmotor und der Spindel in einfacher Weise und als Ganzes in das Spindelgehäuse einsetzen zu können, ist vorzugsweise vorgesehen, dass die radial positionierend wirkenden Passflächen der bezogen auf eine Einschubrichtung vorn liegenden Spindellagereinheit in einem kleineren radialen Abstand von der Spindelachse angeordnet sind als die radial positionierend wirkenden Passflächen der bezogen auf die Einschubrichtung hinten liegenden Spindellagereinheit.

Durch die unterschiedlichen radialen Abstände der Passflächen wird somit die Möglichkeit eröffnet, dass die Passflächen der in Einschubrichtung vorn liegenden Spindellagereinheit nicht mit den Passflächen der in Einschubrichtung hinten liegenden Spindellagereinheit in Berührung kommt, sondern dass die beiden Passflächen für die beiden Spindellagereinheiten berührungsfrei zueinander bewegbar sind bis die jeweiligen Passflächen miteinander in Berührung kommt, um die radiale Positionierung der Spindellagereinheiten relativ zum Spindelgehäuse festzulegen.

Ferner ist vorgesehen, dass die axial positionierend wirkenden Flächen der vorderen Spindellagereinheit und der hinteren Spindellagereinheit durch eine Bewegung in derselben Richtung aneinander zur Anlage bringbar sind, das heißt, dass beispielsweise durch eine Bewegung in der Einschubrichtung sowohl die axial positionierend wirkenden Flächen der vorderen Spindellagereinheit als auch die der hinteren Spindellagereinheit aufeinander zu bewegbar und schließlich zur Anlage bringbar sind oder beim Ausbau der Einheit voneinander weg bewegbar sind.

Im Zusammenhang mit der erfindungsgemäßen Lösung wurden bislang noch keine näheren Angaben über die Positionierung des Statorträgers im Betriebszustand gemacht.

Prinzipiell wäre es denkbar, im Betriebszustand den Statorträger über die beiden Spindellagereinheiten relativ zur Spindel zu positionieren, um den Spalt zwischen dem Stator und dem Rotor innerhalb des erforderlichen Toleranzbereichs halten zu können.

Um jedoch größere Freiheitsgrade bei der Positionierung des Statorträgers im Betriebszustand zu haben, ist vorzugsweise vorgesehen, dass der Statorträger im Betriebszustand über radial positionierend wirkende Flächen relativ zum Spindelgehäuse positionierbar ist, wobei die radial positionierend wirkenden Flächen nicht dieselbe Genauigkeit aufweisen müssen, wie die radial wirkenden Passflächen für die vordere und die hintere Spindellagereinheit.

Da der Statorträger im Betriebszustand aufgrund der Wärmeentwicklung im Stator hohen thermischen Belastungen ausgesetzt ist, und somit zumindest zeitweise einer starken Erwärmung ausgesetzt ist, ist vorzugsweise vorgesehen, dass der Statorträger im Betriebszustand derart in dem Spindelgehäuse angeordnet ist, dass sich dieser ohne Ausbildung mechanischer Spannungen in Richtung parallel zur Spindelachse thermisch ausdehnen kann.

Aus diesem Grund ist vorgesehen, dass die Spindellagereinheiten im Betriebszustand in einer Position relativ zum Statorträger angeordnet sind, dass dieser sich ohne Erzeugung von parallel zur Spindelachse auf die Spindellagereinheiten wirkenden Kräften thermisch ausdehnen kann.

Das heißt, dass der Statorträger im Betriebszustand so eingebaut wird, dass dieser insbesondere keine auf die Spindellagereinheiten wirkenden Kräfte erzeugt, da dadurch die Präzision der Führung der Spindel signifikant beeinträchtigt würde.

Dies lässt sich konstruktiv beispielsweise dadurch erreichen, dass der Statorträger im Betriebszustand sich relativ zu mindestens einer der Spindellagereinheiten durch thermische Ausdehnung bewegen kann.

Dies lässt sich beispielsweise dadurch erreichen, dass der Statorträger mit mindestens einer der Spindeleinheiten über ein in Richtung parallel zur Spindelachse bewegbares Element verbunden ist.

Ein derartiges bewegbares Element könnte beispielsweise eine sich radial zur Spindelachse erstreckende dünne Metallwand oder eine Metallmembran sein, die zwar in radialer Richtung eine steife Positionierung der jeweiligen Spindellagereinheiten relativ zum Statorträger bewirkt, jedoch in Richtung parallel zur Spindelachse eine Bewegbarkeit zwischen Statorträger und Spindellagereinheit zulässt.

Eine andere vorteilhafte Lösung sieht vor, dass der Statorträger im Betriebszustand in axialer Richtung relativ zu mindestens einer der Spindellagereinheiten frei bewegbar ist, das heißt, dass im Betriebszustand keine Fixierung des Statorträgers zu mindestens einer der Spindeleinheiten mehr erfolgt, sondern im einfachsten Fall ein Freiraum zwischen dieser Spindellagereinheit und dem Statorträger besteht.

Beispielsweise wäre es denkbar, den Statorträger im Betriebszustand relativ zu beiden Spindellagereinheiten frei beweglich anzuordnen, so dass damit thermische Ausdehnungen des Statorträgers in keinem Fall zu Problemen führen.

Dies hätte jedoch Probleme mit der drehfesten Fixierung des Statorträgers in dem Spindelgehäuse zur Folge und außerdem Probleme bei einem Übergang vom Betriebszustand in den Montagezustand unter Bildung der Einheit aus Statorträger und Spindellagereinheiten, um diese demontieren zu können.

Aus diesem Grund sieht eine vorteilhafte Lösung vor, dass der Statorträger im Betriebszustand relativ zu nur einer der Spindellagereinheiten fixiert ist, das heißt mit dieser Spindellagereinheit starr oder steif verbunden ist.

Durch die Fixierung des Statorträgers an einer der Spindeleinheiten ist es relativ einfach, die Einheit aus den Spindellagereinheiten und dem Statorträger zur Montage oder Demontage herzustellen, zur Herstellung des Betriebszustandes jedoch wieder insoweit zu trennen.

Um die thermischen Ausdehnungen des Statorträgers nicht allzu groß werden zu lassen und insbesondere auch um den Stator ausreichend kühlen zu können, ist vorzugsweise vorgesehen, dass der Statorträger als Kühlmantel für den Stator ausgebildet ist.

Insofern hat der Statorträger eine doppelte Funktion, nämlich einerseits im Montagezustand eine Verbindung zwischen den Spindellagereinheiten herzustellen und diese Spindellagereinheiten relativ zueinander in definierter Ausrichtung zu halten und andererseits eine optimale Kühlung des Stators zuzulassen.

Vorzugsweise ist dabei der Statorträger so ausgebildet, dass er auf einer dem Stator abgewandten Seite verlaufende Kühlkanäle aufweist.

Vorzugsweise lässt sich die Kühlung optimal dadurch erreichen, dass der Statorträger mit diesem zugewandten Innenflächen des Spindelgehäuses, insbesondere mit seinen Stützflächen und Anlageflächen des Spindelgehäuses, zusammenwirkende Dichtflächen bildet, um die Kühlkanäle abzudichten, so dass damit das Kühlmedium zwischen der Innenfläche des Spindelgehäuses und der dem Stator abgewandten Außenseite des Statorträgers geführt ist. Darüber hinaus betrifft die Erfindung auch noch eine Werkzeugmaschine mit einem Maschinengestell, mit einem Werkzeugträger sowie mit einer Spindeleinheit, wobei erfindungsgemäß die Spindeleinheit nach einem oder mehreren der vorstehend beschriebenen Ausführungsbeispiele ausgebildet ist. Schließlich betrifft die Erfindung auch noch ein Verfahren zur Montage einer mittels einer vorderen Spindellagereinheit und einer hinteren Spindellagereinheit gelagerten Spindel in einem Spindelgehäuse einer Werkzeugmaschine, bei welchem erfindungsgemäß die Spindellagereinheiten zur Herstellung eines Montagezustandes mit einem Statorträger verbunden werden und diese Einheit in das Spindelgehäuse eingebaut oder aus diesem ausgebaut wird und zur Herstellung eines Betriebszustandes mindestens die vordere der Spindellagereinheiten oder die Spindellagereinheiten an dem Spindelgehäuse mittels Passflächen exakt positioniert werden.

Dabei ist es besonders vorteilhaft, wenn die Einheit umfassend die Spindellagereinheiten, den Statorträger, den Spindelmotor und die Spindel betriebsbereit vormontiert wird, so dass die exakte Ausrichtung der Spindellagereinheiten relativ zueinander bereits gegeben ist.

Insbesondere ist es dabei vorteilhaft, wenn die Einheit, umfassend die Spindellagereinheiten, den Statorträger, den Spindelmotor und die Spindel in dem vormontierten Zustand, insbesondere auf einem Prüfstand, eingefahren und vermessen wird, so dass damit einerseits diese Einheiten einfach zugänglich sind und auch einfach vermessen und eingefahren werden können.

Eine besonders vorteilhafte Lösung sieht dabei vor, dass die Einheiten aus Spindellagereinheiten, Statorträger, Spindelmotor und Spindel bei Aufrechterhaltung der Genauigkeit als Module in ein und demselben Spindelgehäuse austauschbar montierbar sind, so dass damit die Möglichkeit besteht, bei in einer Produktion eingesetzten Werkzeugmaschine in einfacher Weise einen Schaden in einer Spindeleinheit zu reparieren, nämlich dadurch, dass ohne Demontage des Spindelgehäuses die Einheit umfassend die Spindellagereinheiten, den Statorträger, den Spindelmotor und die Spindel ausgetauscht werden.

Eine weitere vorteilhafte Lösung des erfindungsgemäßen Verfahrens sieht vor, dass das Spindelgehäuse am Maschinengestell der Werkzeugmaschine mit der gewünschten Genauigkeit vorgesehen wird und dann die Einheit aus Spindellagereinheiten, Statorträger, Spindelmotor und Spindel eingesetzt wird, so dass dadurch die Notwendigkeit entfällt, das Spindelgehäuse hochpräzise relativ zum Maschinengestell auszurichten.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische schematische Darstellung eines ersten Ausführungsbeispiels einer erfindungsgemäßen Werkzeugmaschine;
- Fig. 2: einen Schnitt durch die Spindeleinheit in Fig. 1 gemäß Linie 2-2;
- Fig. 3: eine vergrößerte Darstellung eines Bereichs A in Fig. 2;
- Fig. 4: einen Schnitt längs Linie 4-4 in Fig. 2;
- Fig. 5: eine vergrößerte Darstellung eines Bereichs B in Fig. 2;
- Fig. 6: einen Schnitt längs Linie 6-6 in Fig. 2;
- Fig. 7: eine Darstellung einer erfindungsgemäß aus einem Spindelgehäuse im Montagezustand entnehmbaren Einheit umfassend eine vordere Spindellagereinheit, eine hintere Spindellagereinheit, einen Statorträger sowie einen Spindelmotor und eine Spindel und
- Fig. 8: einen Schnitt ähnlich Fig. 5 durch ein zweites Ausführungsbeispiel einer erfindungsgemäßen Werkzeugmaschine.

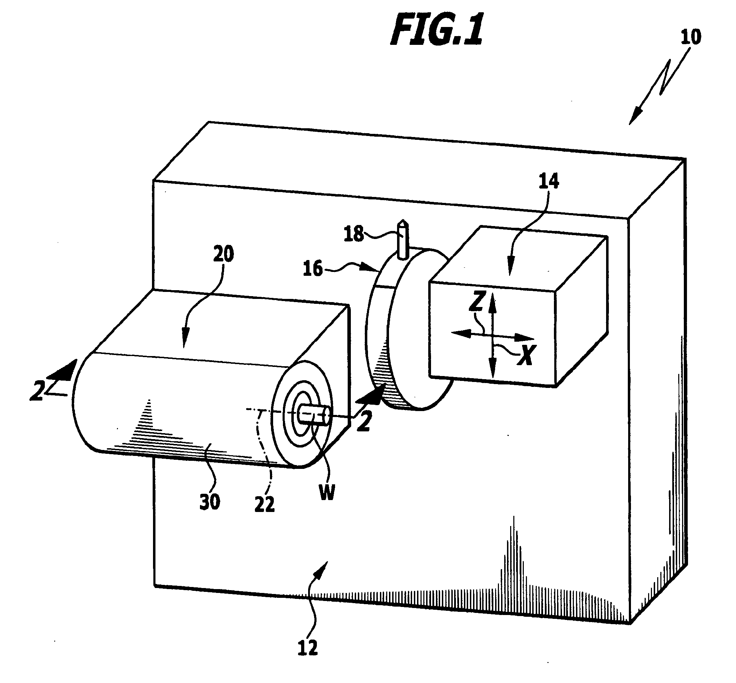

Ein in Fig. 1 dargestelltes erstes Ausführungsbeispiel einer als Ganzes mit 10 bezeichneten Werkzeugmaschine umfasst ein Maschinengestell 12, an welchem ein als Ganzes mit 14 bezeichneter Werkzeugträger angeordnet ist, der beispielsweise einen Revolverkopf 16 aufweist, an welchem eine Vielzahl von Werkzeugen 18 montierbar ist.

Der Revolverkopf 16 ist beispielsweise in Richtung einer X-Achse und in Richtung einer Z-Achse relativ zum Maschinengestell 12 bewegbar, um ein Werkstück W bearbeiten zu können, welches in einer als Ganzes mit 20 bezeichneten Spindeleinheit um eine Spindelachse 22 drehbar gelagert ist.

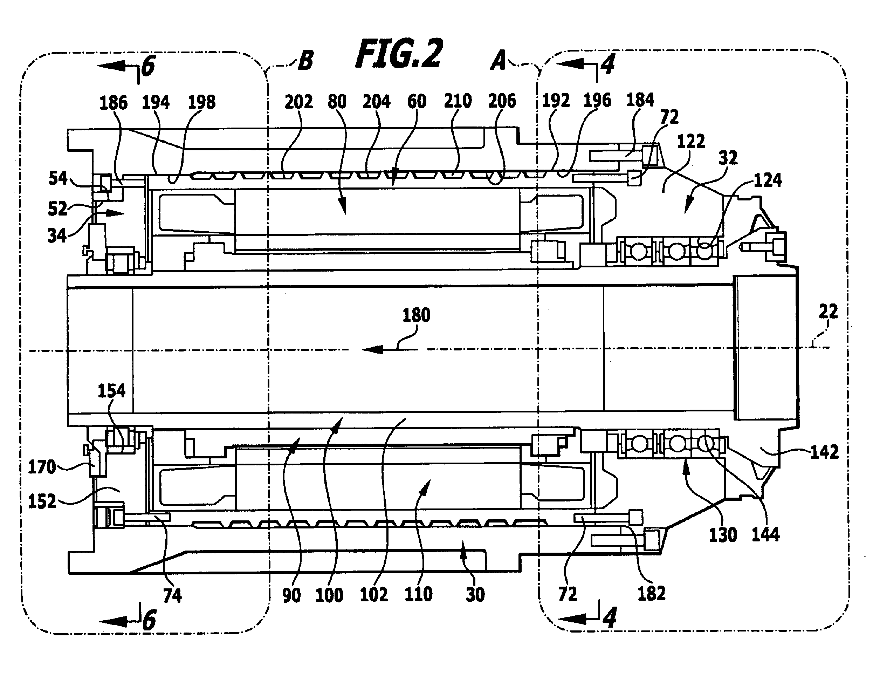

Die Spindeleinheit 20 umfasst, wie in Fig. 2 dargestellt, ein Spindelgehäuse 30, welches beispielsweise fest oder auch bewegbar relativ zum Maschinengestell 12 angeordnet ist, welches jedoch hinsichtlich seiner Anordnung relativ zu den üblichen Achsrichtungen der Werkzeugmaschine 10, beispielsweise zu der X-Achse der Werkzeugmaschine 10 und der Z-Achse der Werkzeugmaschine 10, exakt in Bezug auf das Maschinengestell 10 angeordnet und ausgerichtet sein muss, da über das Spindelgehäuse 30 beispielsweise die Ausrichtung der Spindelachse 22 relativ zu der vorgesehenen X-Achse und der Z-Achse der Werkzeugmaschine 10 vorgegeben ist.

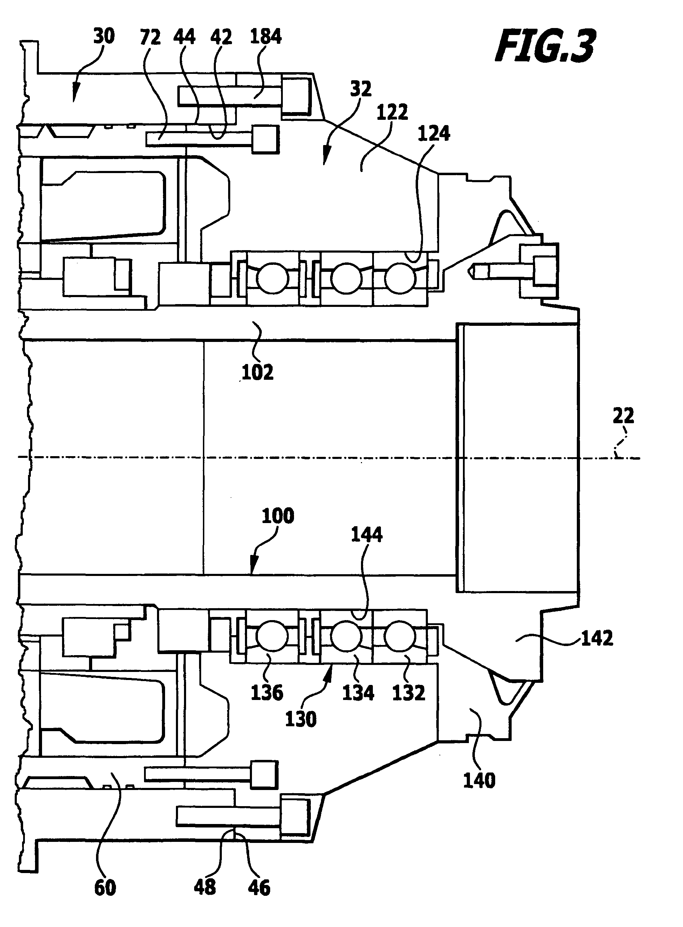

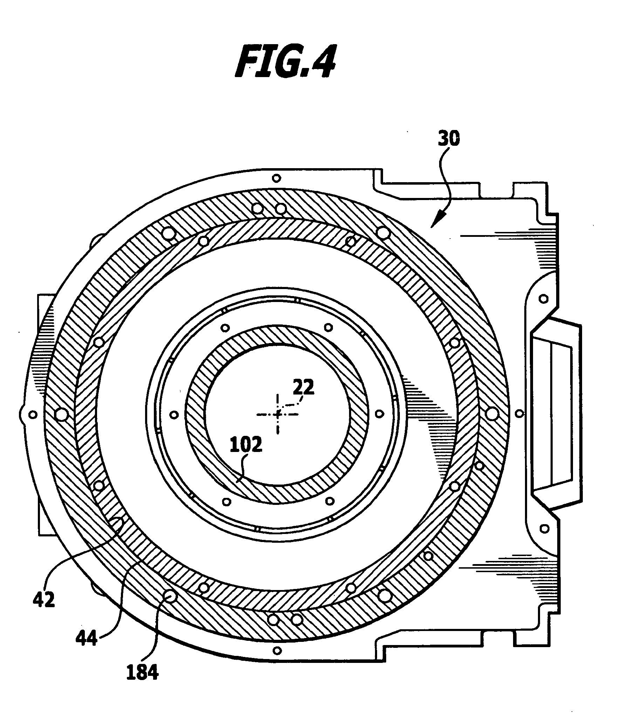

An dem Spindelgehäuse 30 sind im Betriebszustand eine als Ganzes mit 32 bezeichnete vordere Spindellagereinheit sowie eine als Ganzes mit 34 bezeichnete hintere Spindellagereinheit in exakter Ausrichtung relativ zum Spindelgehäuse 30 montierbar, wobei, wie in Fig. 3 und Fig. 4 dargestellt, hierzu das Spindelgehäuse 30 zur Positionierung der vorderen Spindellagereinheit 32 radial zur Spindelachse 22 eine radiale Passfläche 42 aufweist, die beispielsweise der Spindelachse 22 zugewandt angeordnet ist und mit einer radialen Passfläche 44 der vorderen Spindellagereinheit 32 zusammenwirkt, wobei beide Passflächen 42 und 44 vorzugsweise zur Spindelachse 22 zylindrisch verlaufen.

Darüber hinaus wird die vordere Spindellagereinheit 32 relativ zum Spindelgehäuse 30 durch eine quer zur Spindelachse 22 verlaufende Anlagefläche 46 des Spindelgehäuses 30 und eine entsprechende Stützfläche 48 der vorderen Spindellagereinheit 32 in axialer Richtung bezogen auf die Spindelachse 22 exakt positioniert, so dass insgesamt die vordere Spindellagereinheit 32 mit der gleichen Positioniergenauigkeit relativ zum Maschinengestell positioniert ist, wie das Spindelgehäuse 30.

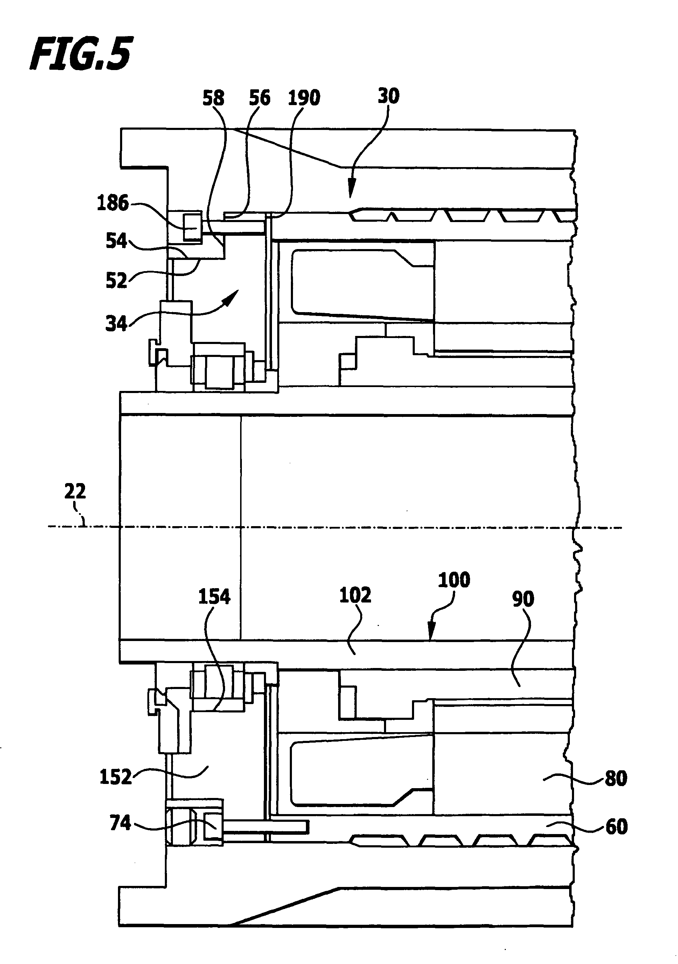

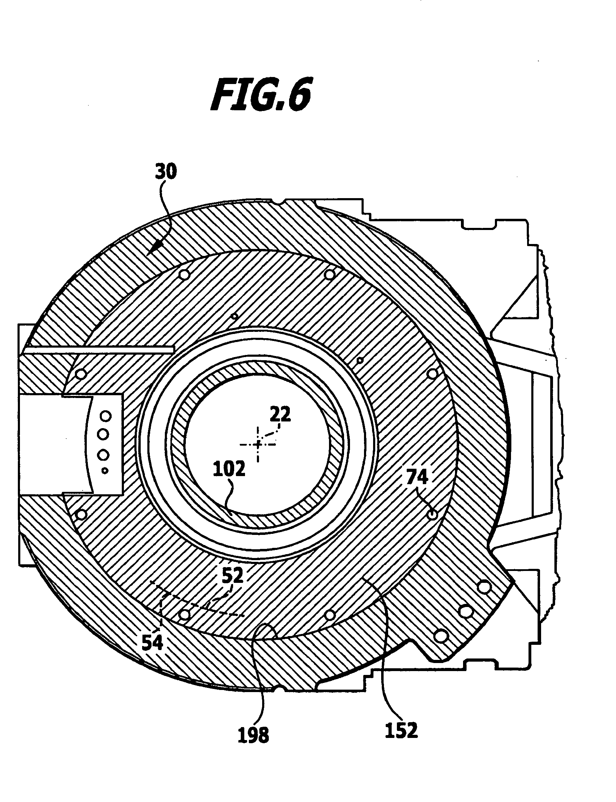

Wie in Fig. 5 und Fig. 6 dargestellt, ist im Betriebszustand auch die hintere Spindellagereinheit 34 relativ zum Spindelgehäuse 30 exakt positionierbar und zwar durch eine Passfläche 52 des Spindelgehäuses 30, die vorzugsweise ebenfalls zylindrisch zur Spindelachse 22 verläuft und mit einer Passfläche 54 der hinteren Spindellagereinheit 34 zusammenwirkt, um somit die hintere Spindellagereinheit 34 radial zur Spindelachse 22 exakt relativ zum Spindelgehäuse zu positionieren.

Darüber hinaus ist das Spindelgehäuse 30 mit einer Anlagefläche 56 versehen, an welche die hintere Spindellagereinheit 34 mit einer Stützfläche 58 anlegbar ist.

Auch die Anlagefläche 56 und die mit dieser zusammenwirkende Stützfläche 58 verlaufen quer zur Spindelachse 22, vorzugsweise senkrecht zu dieser und sind in gleicher Richtung ausgerichtet, wie die Anlagefläche 46 des Spindelgehäuses 30 und die Stützfläche 48 der vorderen Spindellagereinheit 32, so dass die vordere Spindellagereinheit 32 und die hintere Spindellagereinheit 34 durch eine Bewegung derselben in derselben Richtung parallel zur Spindelachse 22 jeweils mit den Stützflächen 48 bzw. 58 an den Anlageflächen 46 bzw. 56 zur Anlage bringbar sind.

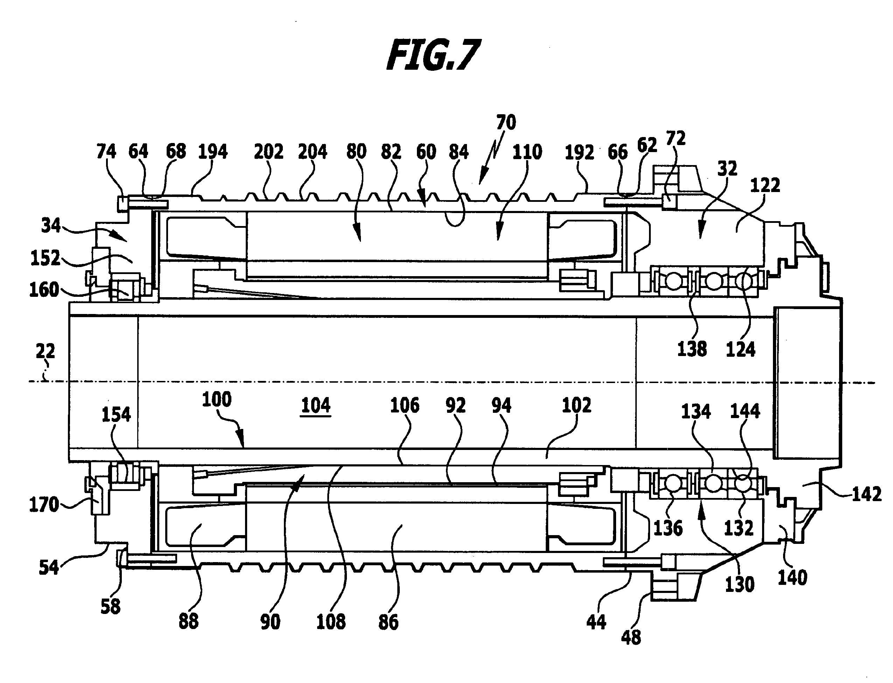

Im Gegensatz zu den aus dem Stand der Technik bekannten Lösungen sind die vordere Spindellagereinheit 32 und die hintere Spindellagereinheit 34 nicht einzeln an dem Spindelgehäuse 30 montierbar, sondern es ist, wie in Fig. 7 dargestellt, vorgesehen, in einem Montagezustand vor und zu der Montage der Spindellagereinheiten 32 und 34 mit den Spindellagereinheiten 32 und 34 sowie einem Statorträger 60 eine Einheit 70 zu bilden, in welcher die Spindellagereinheiten 32 und 34 durch den Statorträger 60 relativ zueinander exakt positioniert sind, wobei hierzu der Statorträger 60 vordere und hintere Anlageflächen 62 bzw. 64 aufweist, an denen die Spindellagereinheiten 32 und 34 mit Stützflächen 66 bzw. 68 anlegbar und dadurch relativ zum Statorträger 60 fixierbar sind.

Vorzugsweise erfolgt zum erreichen des Montagezustandes die Verbindung zwischen der vorderen Spindellagereinheit 32 und der hinteren Spindellagereinheit 34 sowie dem Statorträger 60 durch eine Schraubfixierung mit Schraubelementen 72 und 74, die die jeweilige Spindellagereinheit 32 bzw. 34 durchsetzen und in den Statorträger 60 von Seiten der Anlageflächen 62 und 64 einschraubbar sind, so dass die Schraubelemente 72 und 74 die vordere Spindellagereinheit 32 und den Statorträger 60 im Bereich der miteinander zusammenwirkenden Anlagefläche 62 und der Stützfläche 66 beaufschlagen und die Schraubelemente 74 die hintere Spindellagereinheit 34 und den Statorträger 60 im Bereich der aneinander anliegenden Anlagefläche 64 sowie der Stützfläche 68 unmittelbar beaufschlagen und damit die jeweiligen Anlageflächen 62, 64 sowie die Stützflächen 66, 68 kraftschlüssig relativ zueinander fixieren.

Der Statorträger 60 ist vorzugsweise mantelförmig oder hülsenförmig ausgebildet und umschließt einen Stator 80 auf einer der Spindelachse 22 abgewandten Außenseite 82, wobei der Stator 80 mit der Außenseite 82 an einer Innenseite 84 des Statorträgers 60 anliegt und mit der Außenseite 82 an der Innenseite 84 des Statorträgers 60 relativ zu diesem sowohl in radialer Richtung zur Spindelachse 22 abgestützt ist als auch in axialer Richtung fixiert ist.

Die Fixierung zwischen dem Stator 80 und dem Statorträger 60 kann dabei entweder kraftschlüssig, formschlüssig oder stoffschlüssig erfolgen, so dass der Stator 80 relativ zum Statorträger 60 sowohl gegen Bewegungen radial zur Spindelachse 22 als auch gegen Bewegungen parallel zur Spindelachse 22 fixiert ist.

Vorzugsweise umfasst der Stator 80 ein Blechpaket 86, in welches Statorwicklungen 88 eingewickelt sind und welches der Spindelachse 22 zugeordnete Magnetpolflächen 92 aufweist.

Zweckmäßigerweise wird die Außenseite 82 des Stators 80 durch die Außenseite des Blechpakets 86 gebildet, welches auch die Statorwicklungen 88 trägt und welches die in den Statorwicklungen 88 erzeugte Wärme an den Statorträger 60, vorzugsweise flächenhaft über die an der Innenseite 84 des Statorträgers 60 flächig anliegende Außenseite 82 des Blechpakets 86 ableitet, so dass der Statorträger 60 auch zur Ableitung der im Stator 80 erzeugten Wärme dient.

Das Blechpaket 86 bildet außerdem noch einem Rotor 90 zugewandte Magnetpolflächen 92, wobei zwischen den Magnetpolflächen 92 und dem Rotor 90 ein üblicher Spalt 94 besteht, so dass der Rotor 90 frei drehbar ist.

Der Rotor 90 sitzt auf einer als Ganzes mit 100 bezeichneten Spindel, die beispielsweise als Spindelrohr 102 ausgebildet ist und somit einen zentralen Durchlass 104 aufweist.

Vorzugsweise liegt der Rotor 90 mit einer Innenfläche 106 kraftschlüssig auf einer Mantelfläche 108 der Spindel 100 an und ist dadurch kraftschlüssig mit der Spindel 100 verbunden, so dass die Position des Rotors 90 eindeutig durch die Drehlage und die axiale Lage der Spindel 100 festgelegt ist.

Somit bilden der Stator 80 und der Rotor 90 einen als Ganzes mit 110 bezeichneten Spindelmotor zum Antreiben der Spindel 100, wobei die Relativpositionierung des Rotors 90 zum Stator 80 über die Lagerung der Spindel 100 in den Spindellagereinheiten 32 und 34 erfolgt.

Hierzu umfasst die vordere Spindellagereinheit 32 ein Lagergehäuse 122, welches einerseits die Passfläche 44 und die Stützfläche 48 bildet und außerdem auch noch die Stützfläche 66 zur Abstützung des Lagergehäuses 122 an dem Statorträger 60.

Ferner bildet das Lagergehäuse 122 einen Lagersitz 124, in welchem eine als Ganzes mit 130 bezeichnete Vorderlagereinheit sitzt, die beispielsweise drei Spindellager 132, 134 und 136 umfasst, wobei beispielsweise zwischen dem Spindellager 134 und dem Spindellager 136 Zwischenringe 138 angeordnet sind, die die Funktion haben, überschüssiges Lagerfett aufzunehmen und bei Bedarf wieder dem Lager zuzuführen.

Außerdem ist ein die Vorderlagereinheit 130 bildendes und die Spindellager 132, 134 und 136 umfassendes Lagerpaket durch einen auf das vorderste Spindellager 132 wirkenden Stützring 140 in Richtung der Spindelachse 22 verspannbar, wobei der Stützring 140 vorzugsweise als Labyrinthring mit einem Kopf 142 der Spindel 100 zusammenwirkt, um zwischen dem Kopf 142 der Spindel 100 und dem Stützring 140 eine möglichst gute Abdichtung zu erreichen.

Das aus den Spindellagern 132, 134 und 136 gebildete Lagerpaket sitzt seinerseits wiederum auf einem an der Spindel 100, insbesondere an dem Spindelrohr 102, nahe des Spindelkopfes 142 angeordneten Lagersitz 144, auf welchen die Spindellager 132, 134 und 136 vorzugsweise aufgepresst sind.

Auch die hintere Spindellagereinheit 34 umfasst ein Lagergehäuse 152, welches die Passfläche 54 sowie die Stützfläche 58 und welches außerdem noch mit der Stützfläche 68 zur Fixierung des Lagergehäuses 152 relativ zum Statorträger 60 versehen ist.

Ferner ist das Lagergehäuse 152 mit einem Lagersitz 154 versehen, in welchem eine Hinterlagereinheit 160 sitzt, die beispielsweise als Zylinderrollenlager ausgebildet ist, bei welchem eine radiale Vorspannung einstellbar ist.

Die Fixierung der Hinterlagereinheit 160 in dem Lagersitz 154 erfolgt über einen Stützring 170, welcher an dem Lagergehäuse 152 fixierbar ist, und zwar bei der Montage von einer dem Spindelmotor 110 abgewandten Seite an dem Lagergehäuse 152.

Bei der erfindungsgemäßen Spindeleinheit 20 ist primär die Lage und Ausrichtung der Spindelachse 122 durch die vordere Spindellagereinheit 32 mit der Vorderlagereinheit 130 relativ zum Spindelgehäuse 30 definiert, während die Hinterlagereinheit 160 primär zur zusätzlichen Abstützung der Spindel 100 dient.

Bei der erfindungsgemäßen Spindeleinheit 20 besteht nun die Möglichkeit, die Einheit 70 umfassend den Statorträger 60, die vordere Spindellagereinheit 32 und die hintere Spindellagereinheit 34 sowie den innerhalb des

Statorträgers 60 angeordneten Spindelmotor 110 und die von den Spindellagereinheiten 32 und 34 gelagerte Spindel 100 betriebsbereit vorzumontieren und auf einem Prüfstand einzufahren und zu vermessen, und zwar ohne Einsetzen derselben in das Spindelgehäuse 30.

Beispielsweise wird dabei die Einheit 70 so aufgebaut, dass auf der Spindel 100 zunächst der Stützring 140 aufgeschoben und nahe des Spindelkopfes 142 positioniert wird und dann wird das Lagerpaket umfassend die Spindellager 132, 134, 136 und die Zwischenringe 138 auf den Lagersitz 144 der Spindel 100 aufgepresst.

Die Spindel 100 mit dem Lagerpaket umfassend die Spindellager 132, 134 und 136 und die Zwischenringe 138 wird dann in dem Lagergehäuse 122 montiert und das Lagerpaket wird durch Fixieren des Stützrings 140 an dem Lagergehäuse 122 verspannt.

Anschließend wird der Rotor 90 des Spindelmotors 110 mit der Innenfläche 106 kraftschlüssig auf der Mantelfläche 108 der Spindel 100 montiert und anschließend erfolgt ein Einschieben des Rotors 90 in den Stator 80, der bereits in dem Statorträger 60 sitzt und ein Verbinden des Lagergehäuses 122 mit dem Statorträger 60 durch die Schraubelemente 72.

Abschließend erfolgt die Montage der hinteren Spindellagereinheit 34 mit Montage des Lagergehäuses 152 am Statorträger 60 mittels der Schraubelemente 74 und Einsetzen der Hinterlagereinheit 160 in das Lagergehäuse 52 sowie geeignetes Vorspannen der Hinterlagereinheit 160 in radialer Richtung zur Spindelachse sowie Fixierung der Hinterlagereinheit 160 durch den Stützring 170.

Bei der Montage sowohl der vorderen Spindellagereinheit 32 als auch der hinteren Spindellagereinheit 34 am Statorträger 60 ist die exakte geometrische Lage der Spindelachse 22 relativ zu den Passflächen 44 und 54 sowie den Stützflächen 48 und 58 mit der gewünschten Präzision herzustellen, wobei der Zusammenbau der Einheit 70 umfassend die vordere Spindellagereinheit 32 und die hintere Spindellagereinheit 34 sowie auch der Statorträger 60, in einer Montagevorrichtung erfolgt, welche in gleicher Weise wie das Spindelgehäuse 30 mit den Passflächen 44 und 54 zusammenwirkende Passflächen 42 und 52 sowie mit den Stützflächen 48 und 58 zusammenwirkende Anlageflächen 46 und 56 aufweist, um in dem Montagezustand die exakte Ausrichtung der vorderen Spindellagereinheit 32 und der hinteren Spindellagereinheit 34 relativ zueinander und relativ zum Statorträger 60 zu gewährleisten.

Diese vormontierte und in einem Prüfstand eingefahrene Einheit gemäß Fig. 7 lässt sich in diesem Montagezustand als Ganzes in das in Fig. 2 dargestellte Spindelgehäuse 32 einschieben, und zwar in einer zur Spindelachse 22 parallelen Einschieberichtung 180, ausgehend von einer Frontöffnung 182 des Spindelgehäuses 30, wobei sich an die Frontöffnung 182 die Passflächen 42 des Spindelgehäuses 30 sowie die Anlagefläche 46 des Spindelgehäuses 30 unmittelbar anschließen.

Beim Einschieben der Einheit 70 kommen kurz vor Erreichen der durch die Anlageflächen 46 und 56 des Spindelgehäuses 30 definierten Endstellung die Passflächen 42 und 44 sowie 52 und 54 in Anlage zueinander, wobei die radiale Ausdehnung der Passflächen 52 und 54 geringer ist als die der Passflächen 42 und 44, so dass insbesondere die Passflächen 54 das Spindelgehäuse 30 erst kurz vor der durch die Anlageflächen 46 und 56 definierten Endstellung erreichen und an diesen zur Anlage kommen, um einerseits die hintere Spindellagereinheit 34 und gleichzeitig die vordere Spindellagereinheit 32 radial zur Spindelachse 22 exakt in dem Spindelgehäuse 30 zu positionieren.

Dabei ist, wie in Fig. 2 dargestellt, das Spindelgehäuse 30 so bemessen, dass der Abstand der vom Spindelgehäuse 30 gebildeten Anlageflächen 46 und 56 in Richtung der Spindelachse 22 voneinander geringfügig größer ist als der Abstand der Stützflächen 46 und 56 bei der im Montagezustand fertig montierten Einheit 70, bei welcher die vordere Spindellagereinheit 32 und die hintere Spindellagereinheit 34 fest mit dem Statorträger 60 verbunden und durch diesen relativ zueinander positioniert sind.

Bei in das Spindelgehäuse 30 eingeschobener Einheit 70 erfolgt nun zunächst ein Fixieren der vorderen Spindellagereinheit 32 an dem Spindelgehäuse 30 mittels Schraubelementen 184 (Fig. 2, 3), wobei die Passflächen 42 und 44 sowie die Stützflächen 48 an den Anlageflächen 46 in Anlage gehalten werden.

Damit erfolgt eine exakte Ausrichtung der ersten Spindellagereinheit 32 relativ zum Spindelgehäuse 30 mit der vorstehend bereits erläuterten Präzision und - da die Ausrichtung und Anordnung der Spindelachse 22 relativ zum Maschinengestell 10 primär durch die vordere Spindellagereinheit 32 gegeben ist - bereits eine exakte Ausrichtung der Spindelachse 32 relativ zum Spindelgehäuse 30 und somit zum Maschinengestell 12.

Dabei ist zunächst die hintere Spindellagereinheit 34 nicht relativ zum Spindelgehäuse 30 fixiert, obwohl die Passflächen 52 und 54 bereits eine exakte radiale Ausrichtung vorgeben, allerdings fehlt es an einer exakten axialen Fixierung der hinteren Spindellagereinheit 34 relativ zum Spindelgehäuse 30.

Aus diesem Grund wird nach Fixieren der vorderen Spindellagereinheit 32 relativ zum Spindelgehäuse 30 für den Übergang vom Montagezustand in den Betriebszustand die Verbindung zwischen der hinteren Spindellagereinheit 34 und dem Statorträger 60 durch Lösen der Schraubelemente 74 gelöst, so dass die hintere Spindellagereinheit 34 sich unter Ausbildung eines Spalts 190 zwischen der Anlagefläche 64 und der Stützfläche 68 soweit mit der Stützfläche 68 in Richtung der Anlagefläche 56, das heißt auch in Richtung 180, zum Spindelgehäuse 30 bewegen kann, dass die hintere Spindellagereinheit 34 im Betriebszustand mit Schraubelementen 186 exakt relativ zum Spindelgehäuse 30 fixiert ist (Fig. 5,6). Hierbei lässt die Hinterlagereinheit 160 eine derartige Bewegung des Lagergehäuses 152 relativ zur Spindel 100 über eine dem Spalt 190 entsprechende Distanz in Richtung der Spindelachse 22 zu, wobei hierzu beispielsweise die Hinterlagereinheit 160 als Zylinderrollenlager ausgebildet ist.

Der sich im Betriebszustand zwischen den Anlageflächen 64 und den Stützflächen 68 ausbildende Spalt 100 erlaubt nunmehr dem Statorträger 60 sich aufgrund der Erwärmung durch den Stator 80 innerhalb des Spindelgehäuses 30 auszudehnen ohne thermisch bedingte mechanische Spannungen zwischen der vorderen Spindellagereinheit 32 und der hinteren Spindellagereinheit 34 hervorzurufen und somit die Präzision der Anordnung dieser Spindellagereinheiten 32, 34 relativ zum Spindelgehäuse 30 zu beeinträchtigen.

Die Abstützung des Statorträgers 60 relativ zum Spindelgehäuse 30 erfolgt im Betriebszustand vorzugsweise über am Statorträger 60 vorgesehene Stützflächen 192 und 194, die an Anlageflächen 196 und 198 auf einer Innenseite des Spindelgehäuses 30 anlegbar sind, und somit den Statorträger 60 und damit auch den Stator 80 relativ zum Spindelgehäuse 30 abstützen und positionieren, wobei die Präzision dieser Stützflächen 192 und 194 und der entsprechenden Anlageflächen 196 und 198 zur radialen Fixierung des Statorträgers 60 innerhalb des Spindelgehäuses ausreichend groß ist, um den Stator 80 so zu positionieren, dass der Spalt 94 zwischen dem Stator 80 und dem Rotor 90 innerhalb der Toleranzgrenzen bleibt.

Ferner erfolgt die axiale Festlegung des Statorträgers 60 im Betriebszustand durch seine nach wie vor bestehende Verbindung mit der vorderen Spindellagereinheit 32 sowie auch die drehfeste Festlegung des Statorträgers 60 über die vordere Spindellagereinheit 32.

Der Ausbau der Einheit 70 erfolgt in umgekehrter Reihenfolge, das heißt es erfolgt zuerst ein Lösen der Fixierung der hinteren Spindellagereinheit 34 mit dem Spindelgehäuse 30 und ein Wiederherstellen der Fixierung der hinteren Spindellagereinheit 34 relativ zum Statorträger 60 und nachfolgend ein Lösen der Verbindung zwischen der vorderen Spindellagereinheit 32 und dem Spindelgehäuse 30 so dass die Einheit 70 im Montagezustand ist und wiederum als Ganzes entnommen werden kann und da die vordere Spindellagereinheit 32 in derselben Ausrichtung zur hinteren Spindellagereinheit 34 verbleibt, wie dies in dem Spindelgehäuse 30 der Fall war.

Damit besteht auch die Möglichkeit, eine derartige Einheit 70, bei welcher beispielsweise ein Defekt vorliegt, gegen eine andere derartige Einheit 70 auszutauschen, da alle Einheiten 70 vormontiert und eingefahren sind und somit nach einem Einbau in das Spindelgehäuse 30 dieselbe Maßhaltigkeit für die Ausrichtung und Lage der Spindelachse 22 relativ zum Maschinengestell 12 ergeben.

Um die Wärme aus dem Statorträger 60 effizient abführen zu können, ist dieser an seiner dem Spindelgehäuse 30 zugewandten Seite 202 mit Kühlkanälen 204 versehen, die zwischen den Stützflächen 192 und 194 liegen und zu einer Innenfläche 206 des Spindelgehäuses 30 hin offen sind, allerdings im Betriebszustand von der Innenfläche 206, die zwischen den Anlageflächen 196 und 198 liegt, abgedeckt werden.

Zur Abdichtung eines durch die Kühlkanäle 204 gebildeten Strömungsraums 210 für ein Kühlmedium dienen dann die Stützflächen 192 und 194 und die Anlageflächen 196 und 198 zwischen denen gegebenenfalls noch ein Dichtelement wirksam ist.

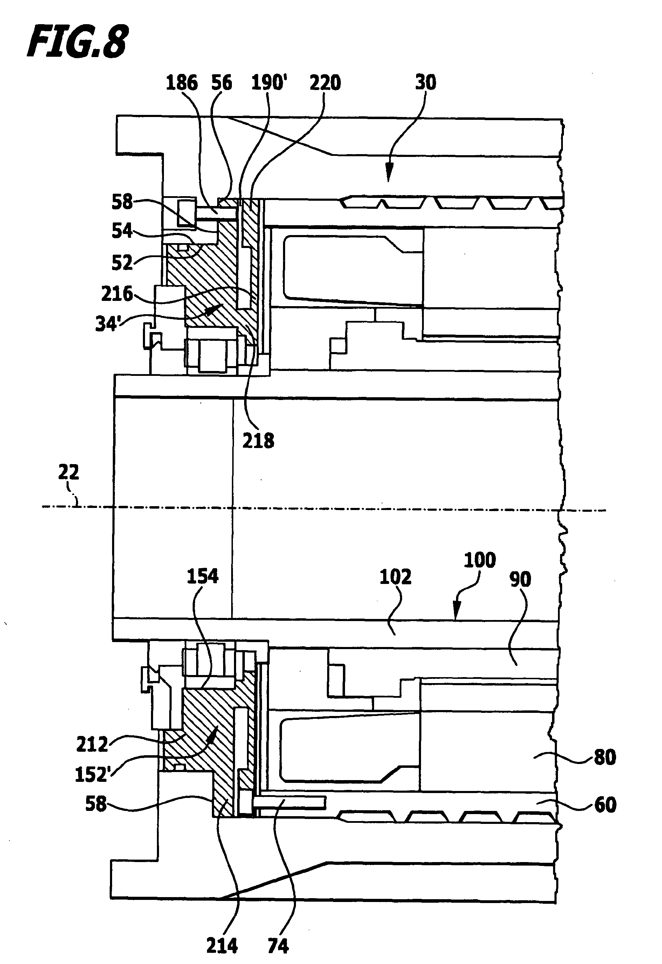

Bei einem zweiten Ausführungsbeispiel, dargestellt in Fig. 8, umfasst die Spindellagereinheit 34' ein Lagergehäuse 152' mit einem Lagergehäusekörper 212, welcher mit der Passfläche 54 und der Stützfläche 58 versehen ist, wobei die Passfläche 54 in gleicher Weise wie bei der Spindellagereinheit 34 des ersten Ausführungsbeispiels in die Passfläche 52 des Spindelgehäuses 30 einsetzbar ist und die Stützfläche 58 an die Anlagefläche 56 des Spindelgehäuses 30 anlegbar ist. Hierzu umfasst der Lagergehäusekörper 212 einen die Stützfläche 58 tragenden Flansch 214, in welchen die Schraubelemente 186 einschraubbar sind.

Ferner ist an das Lagergehäuse 152' eine axial elastische in Richtung parallel zur Spindelachse 22 als dünner Kreisringbereich ausgeführte Wand 216 angeformt, welche sich ausgehend von einem radial innenliegenden, die Hinterlagereinheit 160 aufnehmenden Innenbereich 218 zu einem äußeren Ringflansch 220 erstreckt, welcher mittels der Schraubelemente 74 mit dem Statorträger 60 fest verbindbar ist.

Dadurch, dass sich der sich radial zur Spindelachse 22 erstreckende und geschlossen um die Spindelachse 22 umlaufende axial elastische Wandbereich 216 im Wesentlichen in einer senkrecht zur Spindelachse 22 verlaufenden Ebene erstreckt, ist der Ringflansch 220 relativ zum Lagergehäusekörper 152' in Richtung parallel zur Spindelachse 22 bewegbar, jedoch im Wesentlichen radial zur Spindelachse 22 unbewegbar, so dass auch bei nicht mit dem Spindelgehäuse 30 verbundenem Lagergehäusekörper 212 der Lagergehäusekörper 212 seinerseits relativ zum Statorträger 60 zwar parallel zur Spindelachse 22 geringfügig bewegbar ist, jedoch nicht radial zur Spindelachse 22.

Damit lässt sich nach Einschieben der Einheit 70 in das Spindellagergehäuse 30 und somit auch Einführen des Lagergehäusekörpers 212 mit den Passflächen 54 in die Passflächen 52 des Spindelgehäuses 30 der Lagergehäusekörper 212 mit den Schraubelementen 186 fest relativ zum Spindelgehäuse 30 fixieren und zwar so, dass zwischen dem Ringkörper 220 und dem Flansch 240 der Spalt 190' entsteht, der es dem Statorträger 60 mitsamt dem an diesem mittels der Schraubelemente 74 fixierten Ringflansch 220 ermöglicht, sich thermisch in Richtung parallel zur Spindelachse 22 auszudehnen, ohne in dieser Richtung einem Zwang zu unterliegen, wobei der Ringflansch 220 nach wie vor fest mit dem Statorträger 60 verbunden bleibt.

Ferner führt ein Lösen der Schraubverbindung zwischen dem Spindelgehäuse 30 und dem Lagergehäusekörper 212 zu keiner radialen Dejustierung der Lage des Lagergehäusekörpers 212 relativ zum Statorträger 60, so dass nach Lösen der Schraubelemente 186 die Einheit 70 in der im Zusammenhang mit dem ersten Ausführungsbeispiel beschriebenen Art und Weise aus dem Spindelgehäuse 30 entnommen werden kann.

## Patentansprüche

1. Spindeleinheit (20) für eine Werkzeugmaschine (10), umfassend ein Spindelgehäuse (30) und einen in dem Spindelgehäuse (30) angeordneten Spindelmotor (110) mit einem auf einer Spindel (100) angeordneten Rotor (90) und einem relativ zum Spindelgehäuse (30) mittels eines Statorträgers (60) fixierten Stator (80) sowie mit einer vorderen Spindellagereinheit (32) und einer hinteren Spindellagereinheit (34), welche die Spindel (100) um eine Spindelachse (22) drehbar lagern,
**dadurch gekennzeichnet, dass** in einem Montagezustand die vordere Spindellagereinheit (32) und die hintere Spindellagereinheit (34) mit dem Statorträger (60) zu einer Einheit (70) verbindbar sind, die den Spindelmotor (110) und die Spindel (100) umfasst und als Ganzes in das Spindelgehäuse (30) einsetzbar oder aus diesem entnehmbar ist, und dass in einem Betriebszustand zumindest die vordere Spindellagereinheit (32) über Passflächen (42, 44) exakt relativ zum Spindelgehäuse (30) positionierbar und fixierbar sind.

2. Spindeleinheit nach Anspruch 1, **dadurch gekennzeichnet, dass** die vordere Spindellagereinheit (32) in dem Betriebszustand über radial positionierend wirkende Passflächen (42, 44) relativ zum Spindelgehäuse (30) positionierbar und fixierbar ist.

3. Spindeleinheit nach Anspruch 1 oder 2, **dadurch gekennzeichnet, dass** in dem Betriebszustand die vordere Spindellagereinheit (32) über axial positionierend wirksame Flächen (46, 48) relativ zum Spindelgehäuse (30) positionierbar und fixierbar ist.

4. Spindeleinheit nach einem der voranstehenden Ansprüche, **dadurch gekennzeichnet, dass** die hintere Spindellagereinheit (34) in dem Betriebszustand über radial positionierend wirkende Passflächen (52, 54) relativ zum Spindelgehäuse (30) positionierbar und fixierbar ist.

5. Spindeleinheit nach einem der voranstehenden Ansprüche, **dadurch gekennzeichnet, dass** die hintere Spindellagereinheit (34) in dem Betriebszustand über axial positionierend wirkende Flächen (56, 58) relativ zum Spindelgehäuse (30) positionierbar und fixierbar ist.

6. Spindeleinheit nach einem der voranstehenden Ansprüche, **dadurch gekennzeichnet, dass** die radial positionierend wirkenden Passflächen (52, 54) der bezogen auf eine Einschubrichtung (180) vorn liegenden Spindellagereinheit (34) in einem kleineren radialen Abstand von der Spindelachse (22) angeordnet sind als die radial positionierend wirkenden Passflächen (42, 44) der bezogen auf die Einschubrichtung (180) hinten liegenden Spindellagereinheit (32) und dass insbesondere die axial positionierend wirkenden Flächen (46, 48, 56, 58) der vorderen Spindellagereinheit (32) und der hinteren Spindellagereinheit (34) durch eine Bewegung in derselben Richtung (180) aneinander zur Anlage bringbar sind.

7. Spindeleinheit nach einem der voranstehenden Ansprüche, **dadurch gekennzeichnet, dass** der Statorträger (60) im Betriebszustand über radial positionierend wirkende Flächen (192, 194, 196, 198) relativ zum Spindelgehäuse (30) positionierbar ist.

8. Spindeleinheit nach einem der voranstehenden Ansprüche, **dadurch gekennzeichnet, dass** der Statorträger (60) im Betriebszustand derart in dem Spindelgehäuse (30) angeordnet ist, dass sich dieser ohne Ausbildung mechanischer Spannungen in Richtung parallel zur Spindelachse (22) thermisch ausdehnen kann.

9. Spindeleinheit nach Anspruch 8, **dadurch gekennzeichnet, dass** die Spindellagereinheiten (32, 34) im Betriebszustand in einer Position relativ zum Statorträger (60) angeordnet sind, dass dieser sich ohne Erzeugung von parallel zur Spindelachse (22) auf die Spindellagereinheiten (32, 34) wirkenden Kräften thermisch ausdehnen kann.

10. Spindeleinheit nach einem der voranstehenden Ansprüche, **dadurch gekennzeichnet, dass** der Statorträger (60) im Betriebszustand sich relativ zu mindestens einer der Spindellagereinheiten (32, 34) durch thermische Ausdehnung bewegen kann.

11. Spindeleinheit nach einem der voranstehenden Ansprüche, **dadurch gekennzeichnet, dass** der Statorträger (60) im Betriebszustand in axialer Richtung relativ zu mindestens einer der Spindellagereinheiten (32, 34) frei bewegbar ist.

12. Spindeleinheit nach einem der voranstehenden Ansprüche, **dadurch gekennzeichnet, dass** der Statorträger (60) im Betriebszustand mit relativ zu nur einer der Spindellagereinheiten (32) fixiert ist.

13. Spindeleinheit nach einem der voranstehenden Ansprüche, **dadurch gekennzeichnet, dass** der Statorträger (60) als Kühlmantel für den Stator (80) ausgebildet ist.

14. Werkzeugmaschine mit einem Maschinengestell (12) mit einem Werkzeugträger (14) sowie mit einer Spindeleinheit (20), **dadurch gekennzeichnet, dass** die Spindeleinheit (20) nach einem oder mehreren der vorstehenden Ansprüche ausgebildet ist.

15. Verfahren zur Montage einer mittels einer vorderen Spindellagereinheit (32) und einer hinteren Spindellagereinheit (34) gelagerten Spindel (100) in einem Spindelgehäuse (30) einer Werkzeugmaschine (10), **dadurch gekennzeichnet, dass** die Spindellagereinheiten (32, 34) zur Herstellung eines Montagezustandes mit einem Statorträger (60) verbunden werden und diese Einheit (70) in das Spindelgehäuse (30) eingebaut oder aus diesem ausgebaut wird und dass zur Herstellung eines Betriebszustandes mindestens die vordere Spindellagereinheit (32) an dem Spindelgehäuse (30) mittels Passflächen (42, 44) exakt positioniert wird.

16. Verfahren nach Anspruch 15, **dadurch gekennzeichnet, dass** die Einheit (70), umfassend die Spindellagereinheiten (32, 34), den Statorträger (60), den Spindelmotor (110) und die Spindel (100), betriebsbereit vormontiert wird.

17. Verfahren nach Anspruch 16, **dadurch gekennzeichnet, dass** die Einheit (70), umfassend die Spindellagereinheiten (32, 34), den Statorträger (60), den Spindelmotor (110) und die Spindel (100), in dem vormontierten Zustand eingefahren und vermessen wird.

18. Verfahren nach Anspruch 17, **dadurch gekennzeichnet, dass** die Einheit (70) aus Spindellagereinheiten (32, 34), Statorträger (60), Spindelmotor (110) und Spindel (100) bei Aufrechterhaltung der Genauigkeit als Modul in ein und demselben Spindelgehäuse (30) austauschbar montierbar sind.

## Claims

1. Spindle unit (20) for a machine tool (10), comprising a spindle housing (30) and a spindle motor (110) arranged in the spindle housing (30) and having a rotor (90) arranged on a spindle (100) and a stator (80) fixed in place relative to the spindle housing (30) by means of a stator carrier (60) as well as a front spindle bearing unit (32) and a rear spindle bearing unit (34) mounting the spindle (100) for rotation about a spindle axis (22),
**characterized in that** in an assembled state the front spindle bearing unit (32) and the rear spindle bearing unit (34) are connectable to the stator carrier (60) to form a unit (70) comprising the spindle motor (110) and the spindle (100), said unit being insertable into the spindle housing (30) as a whole or removable from it and that in an operating state at least the front spindle bearing unit (32) is positionable and fixable in place exactly relative to the spindle housing (30) via mating surfaces (42, 44).

2. Spindle unit as defined in claim 1, **characterized in that** in the operating state the front spindle bearing unit (32) is positionable and fixable in place relative to the spindle housing (30) via mating surfaces (42, 44) acting in a radially positioning manner.

3. Spindle unit as defined in claim 1 or 2, **characterized in that** in the operating state the front spindle bearing unit (32) is positionable and fixable in place relative to the spindle housing (30) via surfaces (46, 48) effective in an axially positioning manner.

4. Spindle unit as defined in any one of the preceding claims, **characterized in that** in the operating state the rear spindle bearing unit (34) is positionable and fixable in place relative to the spindle housing (30) via mating surfaces (52, 54) acting in a radially positioning manner.

5. Spindle unit as defined in any one of the preceding claims, **characterized in that** in the operating state the rear spindle bearing unit (34) is positionable and fixable in place relative to the spindle housing (30) via surfaces (56, 58) acting in an axially positioning manner.

6. Spindle unit as defined in any one of the preceding claims, **characterized in that** the mating surfaces (52, 54) of the spindle bearing unit (34) located to the front with respect to a direction of insertion (180), said mating surfaces acting in a radially positioning manner, are arranged at a smaller radial distance from the spindle axis (22) than the mating surfaces (42, 44) of the spindle bearing unit (32) located to the rear with respect to the direction of insertion (180), said mating surfaces acting in a radially positioning manner, and that in particular the surfaces (46, 48, 56, 58) of the front spindle bearing unit (32) and the rear spindle bearing unit (34) acting in an axially positioning manner are adapted to be brought into engagement with one another as a result of movement in the same direction (180).

7. Spindle unit as defined in any one of the preceding claims, **characterized in that** in the operating state the stator carrier (60) is positionable relative to the spindle housing (30) via surfaces (192, 194, 196, 198) acting in a radially positioning manner.

8. Spindle unit as defined in any one of the preceding claims, **characterized in that** in the operating state the stator carrier (60) is arranged in the spindle housing (30) in such a manner that it can expand thermally in a direction parallel to the spindle axis (22) without generating mechanical tensions.

9. Spindle unit as defined in claim 8, **characterized in that** in the operating state the spindle bearing units (32, 34) are arranged in a position relative to the stator carrier (60) such that it can expand thermally without generating forces acting on the spindle bearing units (32, 34) parallel to the spindle axis (22).

10. Spindle unit as defined in any one of the preceding claims, **characterized in that** in the operating state the stator carrier (60) can move relative to at least one of the spindle bearing units (32, 34) by way of thermal expansion.

11. Spindle unit as defined in any one of the preceding claims, **characterized in that** in the operating state the stator carrier (60) is freely movable relative to at least one of the spindle bearing units (32, 34) in an axial direction.

12. Spindle unit as defined in any one of the preceding claims, **characterized in that** in the operating state the stator carrier (60) is fixed in place relative to only one of the spindle bearing units (32).

13. Spindle unit as defined in any one of the preceding claims, **characterized in that** the stator carrier (60) is designed as a cooling jacket for the stator (80).

14. Machine tool with a machine frame (12) comprising a tool carrier (14) as well as a spindle unit (20), **characterized in that** the spindle unit (20) is designed in accordance with any or several of the preceding claims.

15. Method for the assembly of a spindle (100) mounted by means of a front spindle bearing unit (32) and a rear spindle bearing unit (34) in a spindle housing (30) of a machine tool (10), **characterized in that** the spindle bearing units (32, 34) are connected to a stator carrier (60) to create an assembled state and this unit (70) is inserted into the spindle housing (30) or removed from it and that to create an operating state at least the front spindle bearing unit (32) is positioned exactly on the spindle housing (30) by means of mating surfaces (42, 44).

16. Method as defined in claim 15, **characterized in that** the unit (70) comprising the spindle bearing units (32, 34), the stator carrier (60), the spindle motor (110) and the spindle (100) is preassembled ready for operation.

17. Method as defined in claim 16, **characterized in that** the unit (70), comprising the spindle bearing units (32, 34), the stator carrier (60), the spindle motor (110) and the spindle (100) in the preassembled state, is installed and measured.

18. Method as defined in claim 17, **characterized in that** the unit (70) consisting of spindle bearing units (32, 34), stator carrier (60), spindle motor (110) and spindle (100) is mountable as a module into one and the same spindle housing (30) so as to be replaceable whilst maintaining its precision.

## Revendications

1. Unité de broche (20) pour une machine-outil (10), comportant un boîtier de broche (30) et un moteur de broche (110) disposé dans le boîtier de broche (30) et doté d'un rotor (90) disposé sur une broche (100) et doté d'un stator (80) fixé par rapport au boîtier de broche (30) au moyen d'un support de stator (60) ainsi que doté d'une unité de palier de broche (32) avant et d'une unité de palier de broche arrière (34), lesquelles logent la broche (100) de manière à pouvoir tourner autour d'un axe de broche (22),
**caractérisée en ce que** dans un état de montage, l'unité de palier de broche avant (32) et l'unité de palier de broche arrière (34) peuvent être reliées au support de stator (60) pour former une unité (70), laquelle comprend le moteur de broche (110) et la broche (100) et peut être insérée comme un tout dans le boîtier de broche (30) ou en être retirée, et **en ce que** dans un état de fonctionnement, au moins l'unité de palier de broche avant (32) peut être positionnée et fixée avec exactitude par rapport au boîtier de broche (30) par l'intermédiaire de surfaces d'ajustage (42, 44).

2. Unité de broche selon la revendication 1, **caractérisée en ce que** l'unité de palier de broche avant (32) peut être positionnée et fixe dans l'état de fonctionnement par rapport au boîtier de broche (30) par l'intermédiaire de surfaces d'ajustage (42, 44) ayant une action de positionnement dans le sens radial.

3. Unité de broche selon la revendication 1 ou 2, **caractérisée en ce que** dans l'état de fonctionnement, l'unité de palier de broche avant (32) peut être positionnée et fixée par rapport au boîtier de broche (30) par l'intermédiaire de surface (46, 48) ayant une action de positionnement dans le sens axial.

4. Unité de broche selon l'une quelconque des revendications précédentes, **caractérisée en ce que** l'unité de palier de broche arrière (34) peut être positionnée et fixée dans l'état de fonctionnement par l'intermédiaire de surfaces d'ajustage (52, 54) ayant une action de positionnement dans le sens radial par rapport au boîtier de broche (30).

5. Unité de broche selon l'une quelconque des revendications précédentes, **caractérisée en ce que** l'unité de broche de palier arrière (34) peut être positionnée et fixée dans l'état de fonctionnement par rapport au boîtier de broche (30) par l'intermédiaire de surfaces (56, 58) ayant une action de positionnement dans le sens axial.

6. Unité de broche selon l'une quelconque des revendications précédentes, **caractérisée en ce que** les surfaces d'ajustage (52, 54) ayant une action de positionnement dans le sens radial de l'unité de palier de broche (34) se trouvant à l'avant par rapport à une direction d'insertion par coulissement (180) sont disposées à une plus petite distance radiale de l'axe de broche (22) que les surfaces d'ajustage (42, 44) ayant une action de positionnement dans le sens radial de l'unité de palier de broche (32) se trouvant à l'arrière par rapport à la direction d'insertion par coulissement (180), et **en ce qu'**en particulier les surfaces à action de positionnement dans le sens axial (46, 48, 56, 58) de l'unité de palier de broche avant (32) et de l'unité de palier de broche arrière (34) peuvent être amenées en appui les unes contre les autres par un déplacement dans la même direction (180).

7. Unité de broche selon l'une quelconque des revendications précédentes, **caractérisée en ce que** le support de stator (60) peut être positionné dans l'état de fonctionnement par rapport au boîtier de broche (30) par l'intermédiaire de surfaces (192, 194, 196, 198) à action de positionnement dans le sens radial.

8. Unité de broche selon l'une quelconque des revendications précédentes, **caractérisée en ce que** le support de stator (60) est disposé dans l'état de fonctionnement dans le boîtier de broche (30) de telle manière que ledit support de stator peut se dilater thermiquement dans la direction parallèle par rapport à l'axe de broche (22) sans formation de tensions mécaniques.

9. Unité de broche selon la revendication 8, **caractérisée en ce que** les unités de palier de broche (32, 34) sont disposées dans l'état de fonctionnement dans une position par rapport au support de stator (60), **en ce que** ledit support de stator peut se dilater thermiquement sans que des forces agissant sur les unités de palier de broche (32, 34) de manière parallèle par rapport à l'axe de broche (22) ne soient générées.

10. Unité de broche selon l'une quelconque des revendications précédentes, **caractérisée en ce que** le support de stator (60) peut se déplacer par dilatation thermique par rapport à au moins une des unités de palier de broche (32, 34) dans l'état de fonctionnement.

11. Unité de broche selon l'une quelconque des revendications précédentes, **caractérisée en ce que** le support de stator (60) peut être déplacé dans l'état de fonctionnement dans une direction axiale par rapport à au moins une des unités de palier de broche (32, 34).

12. Unité de broche selon l'une quelconque des revendications précédentes, **caractérisée en ce que** le support de stator (60) est fixé dans l'état de fonctionnement par rapport à uniquement une seule des unités de palier de broche (32).

13. Unité de broche selon l'une quelconque des revendications précédentes, **caractérisée en ce que** le support de stator (60) est réalisé sous la forme d'une enveloppe de refroidissement pour le stator (80).

14. Machine-outil comportant un bâti de machine (12) doté d'un porte-outil (14) ainsi que d'une unité de broche (20), **caractérisée en ce que** l'unité de broche (20) est réalisée selon l'une quelconque ou plusieurs des revendications précédentes.

15. Procédé servant au montage d'une broche (100) logée au moyen d'une unité de palier de broche avant (32) et d'une unité de palier de broche arrière (34) dans un boîtier de broche (30) d'une machine-outil (10), **caractérisé en ce que** les unités de palier de broche (32, 34) sont reliées à un support de stator (60) aux fins de l'établissement d'un état de montage, et **en ce que** ladite unité (70) est intégrée dans le boîtier de broche (30) ou est démontée de ce dernier, et **en ce qu'**au moins l'unité de palier de broche avant (32) est exactement positionnée au niveau du boîtier de broche (30) au moyen de surfaces d'ajustage (42, 44) aux fins d'établir un état de fonctionnement.

16. Procédé selon la revendication 15, **caractérisé en ce que** l'unité (70), comportant les unités de palier de broche (32, 34), le support de stator (60), le moteur de broche (110) et la broche (100), est préalablement montée prête à fonctionner.

17. Procédé selon la revendication 16, **caractérisé en ce que** l'unité (70), comportant les unités de palier de broche (32, 34), le support de stator (60), le moteur de broche (110) et la broche (100), est rentrée et dimensionnée dans l'état préalablement monté.

18. Procédé selon la revendication 17, **caractérisé en ce que** l'unité (70) constituée des unités de palier de broche (32, 34), le support de stator (60), le moteur de broche (110) et la broche (100) peuvent être montés de manière interchangeable dans un seul et même boîtier de broche (30) tout en maintenant la précision en tant que module.
